Europäisches Patentamt

European Patent Office

Office européen des brevets

(19)

(11) Veröffentlichungsnummer: **0 048 458**

**A2**

(12) **EUROPÄISCHE PATENTANMELDUNG**

(21) Anmeldenummer: 81107376.6

(22) Anmeldetag: 17.09.81

(51) Int. Cl.³: **B 23 Q 17/02**
**B 23 Q 1/00**

(30) Priorität: 18.09.80 DE 3035229

(43) Veröffentlichungstag der Anmeldung:
31.03.82 Patentblatt 82/13

(84) Benannte Vertragsstaaten:
CH FR GB IT LI SE

(71) Anmelder: Dieter Hansen GmbH
Jahnstrasse 9 & 11
D-6116 Eppertshausen(DE)

(72) Erfinder: Zimmer, Alfred
Hochstrasse 10
D-6101 Brensbach(DE)

(74) Vertreter: Zinngrebe, Horst, Dr.rer.nat. et al,
Patentanwälte Dipl.-Ing. G. Schliebs Dr.rer.nat. Horst
Zinngrebe Claudiusweg 17 A
D-6100 Darmstadt(DE)

(54) Anordnung aus Werkzeughalter und Spindel-Spannfutter für Werkzeugmaschinen und Kopierverfahren zur Herstellung.

(57) Beschrieben ist eine Anordnung aus Werkzeughalter und Spindel-Spannfutter für Werkzeugmaschinen zur spanabhebenden Bearbeitung von Werkstücken. Um eine Paarung aus Werkzeughalter und Spindel-Spannfutter zu schaffen, die selbstzentrierend, einfach und robust in ihrem Aufbau und daher wartungsfrei ist, ein einfaches Vervielfachen (kopieren) ermöglicht und mit der Werkzeugwechsel und -übergabe zwischen einem Magazin und der Spindel mit einfachen, translatorischen und Rotationsbewegungen ausgeführt werden können, ist vorgesehen, daß der gespannte Werkzeughalter mit seiner Bodenfläche an der Stirnfläche des Spindel-Spannfutters an drei Punkten aufliegt und, bezogen auf die Stirnfläche, zentriert ist, an denen Halbkugeln über die Stirnfläche vorstehen und diese aufnehmenden Vertiefungen in der Bodenfläche liegen. Ferner wird ein Kopierverfahren zur Herstellung einer Paarung aus Werkzeughalter und Spindel-Spannfutter beschrieben.

Fig.1

## BEZEICHNUNG
siehe Titelseite

Die Erfindung betrifft eine Anordnung aus Werkzeughalter und Spindel-Spannfutter für Werkzeugmaschinen zur spanabhebenden Bearbeitung von Werkstücken. Es handelt sich also um eine Paarung aus Werkzeughalter und Spindel-Spannfutter. Der Werkzeughalter dient seinerseits zur Aufnahme eines spanabhebenden Werkzeuges, das entweder mechanisch oder hydraulisch gespannt wird, gewöhnlich mittels seines Werkzeugschaftes, der in den Werkzeughalter eingeführt wird. Der Werkzeughalter (mit dem Werkzeug) wird wiederum am Spindel-Spannfutter mechanisch mit Zangen oder magnetisch mit einem Magnetspannfutter gespannt - oder auch auf dem Tisch einer Werkzeugmaschine aufgespannt, wenn das Werkzeug bearbeitet werden soll.

Paarungen dieser Art dienen in Werkzeugwechseleinrichtungen dem automatischen Werkzeugwechsel im Verlauf planmäßiger Bearbeitungsvorgänge, vorzugsweise bei der spanabhebenden Bearbeitung von Werkstücken durch Fräsen, Bohren, Funkenerodieren u. dgl. Die Wechselzeiten und -vorgänge werden mittels Lochstreifen oder Magnetband gesteuert. Da die Maschinen ihr Programm unbeaufsichtigt erledigen, Funkenerodiermaschinen z.B. auch während der Nacht durchlaufen, werden bezüglich der Einhaltung sehr enger Lagetoleranzen der Werkzeuge an der Spindel und des störungsfreien Wechsels sehr hohe Anforderungen an die Wechseleinrichtung gestellt.

Der Erfindung liegt die Aufgabe zugrunde, eine Paarung aus Werkzeughalter und Spindel-Spannfutter zu finden, die selbstzentrierend, einfach und robust in ihrem Aufbau und daher wartungsfrei ist, ein einfaches Vervielfachen (kopieren) ermöglicht und mit der Werkzeugwechsel und -übergabe

Dipl.-Ing. Günter Schliebs
Dr. rer. nat. Horst Zinngrebe

H 509

Blatt 2

Patentanwälte
in Darmstadt

0048458

zwischen einem Magazin und der Spindel mit einfachen, translatorischen und Rotationsbewegungen ausgeführt werden können.

Diese Aufgabe wird erfindungsgemäß mit einer Anordnung gelöst, bei der der gespannte Werkzeughalter mit seiner Bodenfläche an der Stirnfläche des Spindel-Spannfutters an drei Punkten aufliegt und, bezogen auf die Stirnfläche, zentriert ist, an denen Halbkugeln über die Stirnfläche vorstehen und diese aufnehmende Vertiefungen in der Bodenfläche liegen. Unter "zentrieren" wird hier das Ausrichten des Halters in der Normalen zur Stirnfläche des Futters (fluchtend mit der Spindelachse) sowie in der Höhe und im Azimut (im in der Fläche liegenden Winkel) zur Stirnfläche verstanden.

Die Selbstzentrierung findet in einer Gleitbewegung der Halbkugeln an den Wänden der sie aufnehmenden Vertiefungen bei der Annäherung des Halters an das Spannfutter statt. Eine Dreipunktlagerung ergibt bekanntlich in jedem Falle einen einwandfreien Sitz, da durch drei Punkte immer eine Ebene gelegt werden kann. Die drei Halbkugeln und Kugelsitze lassen sich auf einfache Weise überwachen und sauberhalten.

Die Erfindung ermöglicht also sehr einfache, automatisch arbeitende Werkzeugwechselvorrichtungen, mit denen beim Wechsel die Kugeln und ihre Sitze nur näherungsweise aufeinander ausgerichtet sein müssen - im Gegensatz zu bekannten Systemen zur Lagefixierung des Werkzeughalters am Spannfutter, die mit seitlichen Anschlagflächen und/oder Passstiften arbeiten.

Dipl.-Ing. Günter Schliebs
Dr. rer. nat. Horst Zinngrebe

H 509

Blatt 3

Patentanwälte
in Darmstadt

0048458

Wenn der Halter sitzt und gespannt wird, kann zugleich eine drehschlüssige Verbindung hergestellt werden, mit der ein für die spanabhebende Arbeit des jeweiligen Werkzeuges benötigtes Drehmoment von der Spindel auf das Werkzeug übertragen werden kann. Bei der Verwendung der Anordnung an Funkenerodiermaschinen mit drehender Pinole reicht die Lagerung der drei Halbkugeln in ihren Sitzen in Verbindung z.B. mit einem Magnetspannfutter bereits aus.

Die Verwendung von Stahlkugeln, wie sie in Präzisionskugellagern verwendet werden, die zur Hälfte in die Stirnfläche des Spannfutters eingelassen sind, während in die Bodenfläche des Halters konische Becher als Aufnahmen für die zentrierenden Halbkugeln eingelassen sind, ermöglicht eine einfache Fertigung mit hoher Lagepräzision, wie sie insbesondere bei Funkenerodiermaschinen für den Elektrodenwechsel verlangt wird.

Die Verwendung gehärteter Stahlkugeln mit kleinsten Durchmessertoleranzen allein ist aber noch keine Gewähr für eine feinsttolerierte Lagefixierung bei voller Austauschbarkeit zwischen Werkzeughaltern und Spannfuttern. Dafür ist auch eine passgerechte Anordnung der Kugeln und Vertiefungen in den miteinander in Kontakt kommenden Flächen erforderlich. Hierfür sind in einer bevorzugten Ausführungsform der Erfindung die Kugeln in Näpfen angeordnet und gehalten, die in Ausnehmungen im Spindel-Spannfutter eingeschoben und eingegossen sind, während die Becher in Näpfen ausgeformt sind, die in Ausnehmung des Werkzeughalters eingeschoben und eingegossen sind. Auf diese Weise läßt sich bei der Herstellung eine exakte Lagefixierung auf die drei Kontaktpunkte erreichen, die vorzugsweise auf den Ecken eines gleichseitigen Dreiecks liegen.

Dipl.-Ing. Günter Schliebs
Dr. rer. nat. Horst Zinngrebe          H 509                    Blatt 4                                      Patentanwälte
in Darmstadt

0048458

Die Herstellung von Serien nach einem Kopierverfahren
wird in überraschend einfacher Weise erfindungsgemäß
dadurch ermöglicht, daß

ein Lehrfutter mit zwei planparallelen Flächen hergestellt wird, in dessen eine Fläche an den vorgegebenen drei Punkten becherförmige Aufnahmen für
Kugeln derart, daß diese als Halbkugeln über die
Fläche vorstehen, eingearbeitet werden;

daß ein Spannfutter in der Weise hergestellt wird,
daß in drei vorbereitete Ausnehmungen drei Druckfedern und drei Näpfe mit je einer Kugel eingeschoben werden,
und daß das vorbereitete Futter mit dem Lehrfutter
deckungsgleich zusammengefügt und unter einen Druck
gesetzt wird, der den Gegendruck der Druckfedern
überwindet, worauf die Näpfe in der Lage, in der sie
sich eingestellt haben, mit einem erstarrungsfähigen
flüssigen Werkstoff, z.B. Gießharz, eingegossen werden;

daß ein Werkzeughalter in der Weise hergestellt wird,
daß in drei vorbereitete Ausnehmungen drei Druckfedern und drei Näpfe eingeschoben werden,
und daß der vorbereitete Halter mit dem Lehrfutter
in dessen Aufnahmen Kugeln eingesetzt worden sind,
deckungsgleich zusammengefügt und unter einen Druck
gesetzt wird, der den Gegendruck der Druckfedern überwindet, worauf die Näpfe in der Lage, in der sie sich
eingestellt haben, mit einem erstarrungsfähigen
flüssigen Werkstoff, z.B. Gießharz, eingegossen werden.

Gegebenenfalls werden die Stirnflächen der Futter bzw.
die Bodenflächen der Halter nach dem Erstarren der
Vergußmasse und Abheben von dem Lehrfutter um einige
Zehntel mm abgeschliffen.

Anordnung und Kopierverfahren nach der Erfindung werden im folgenden anhand einer Zeichnung näher erläutert. In dieser zeigen

Fig. 1 eine Anordnung aus Elektrodenhalter und Spannfutter an der Pinole einer Funkenerodiermaschine

und dazu jeweils in Draufsicht und (Teil-) Längsschnitt

Fig. 2 einen Elektrodenhalter,

Fig. 3 ein Magnetspannfutter,

Fig. 4 ein mechanisches Spannfutter;

Fig. 5 eine Einzelheit X aus Fig. 1 in vergrößertem Maßstab;

Fig. 6 ein Lehrfutter zur Herstellung der Teile im Kopierverfahren.

Fig. 7 eine schematische Darstellung einer weiteren bevorzugten Ausführungsform der Erfindung.

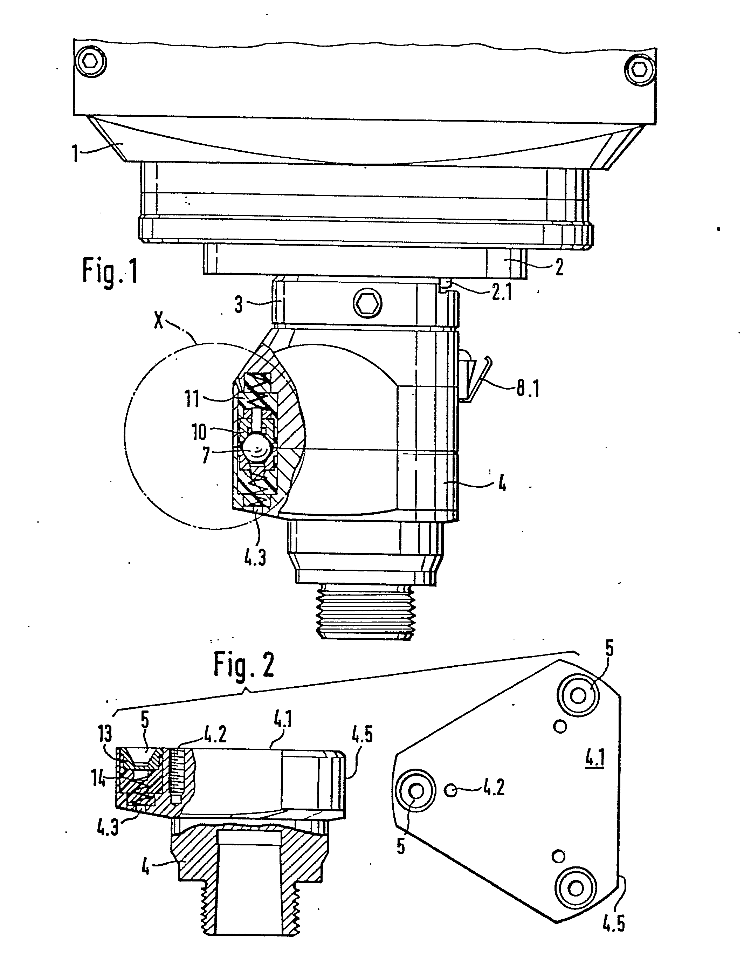

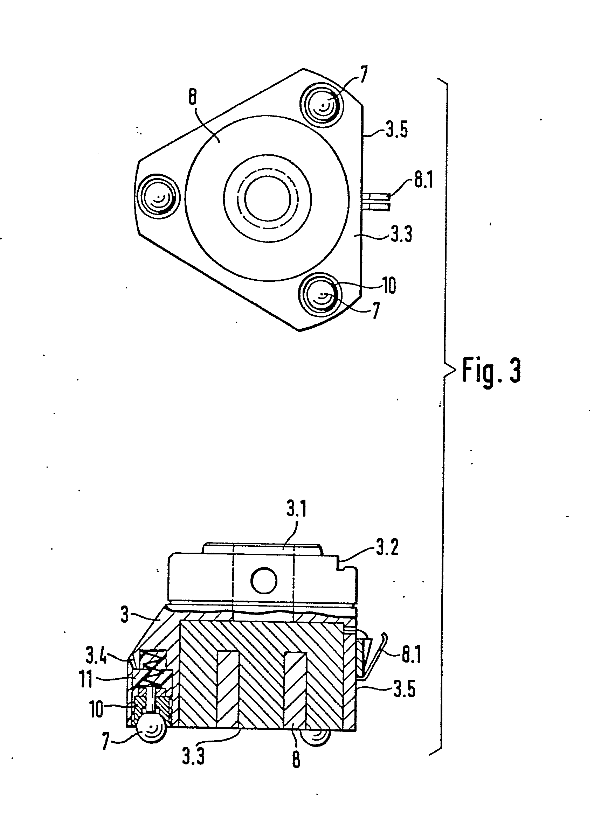

Fig. 1 zeigt in Seitenansicht den Pinolenkopf 1 einer Funkenerodiermaschine. An der Pinole 2 sitzt ein Spannfutter 3, das mit einem Kurzkegel 3.1 und mit einer Referenzfläche 3.2 (Fig. 3) zu einer Anschlagleiste 2.1 an der Pinole 2 nach Höhe und Azimut (im Winkel) zentriert ist. An dem Spannfutter 3 sitzt ein Halter 4, in dem in nicht dargestellter, bekannter Weise der Schaft einer (nicht dargestellten) Elektrode aufgenommen und durch mechanisches oder hydraulisches Spannen gehalten wird.

Im Falle einer Werkzeugmaschine für mechanische spanabhebende Bearbeitung (z.B. Bohr- oder Fräsmaschine) würde es sich um den Spindelkopf mit der Spindel und den Werkzeughalter für das Bearbeitungswerkzeug handeln. Die

Dipl.-Ing. Günter Schliebs
Dr. rer. nat. Horst Zinngrebe          H 509          Blatt  6          Patentanwälte
in Darmstadt

0048458

Justierung bzw. Zentrierung des Futters mittels seitlicher Referenzflächen ist von bekannter Art und beibehalten, weil ein Spannfutter nur selten und dann von Hand
gewechselt wird.

Fig. 2 zeigt den Halter 4 mit Blick auf seine Bodenfläche
4.1, in die auf zwei zur Halterachse Z - Z konzentrischen
Kreisen unter Zentriwinkeln von 120 Grad drei konische
Becher 5 eingelassen und drei Gewinde-Sacklöcher 4.2 eingearbeitet sind.

Fig. 3 zeigt das Spannfutter 3 mit seiner Stirnfläche 3.3,
aus der auf einem zur Futterachse Z - Z konzentrischen
Kreis drei Stahlkugeln 7 als Halbkugeln hervorstehen. Das
Spannfutter ist ein Magnetspannfutter mit einem Elektromagneten 8, dessen Stromkreis an Schleifkontakte 8.1
herausgeführt ist. Man erkennt ferner die Referenzfläche
3.2 zur Anschlagleiste 2.1 an der Pinole (Fig. 1) und
den Kurzkegel 3.1.

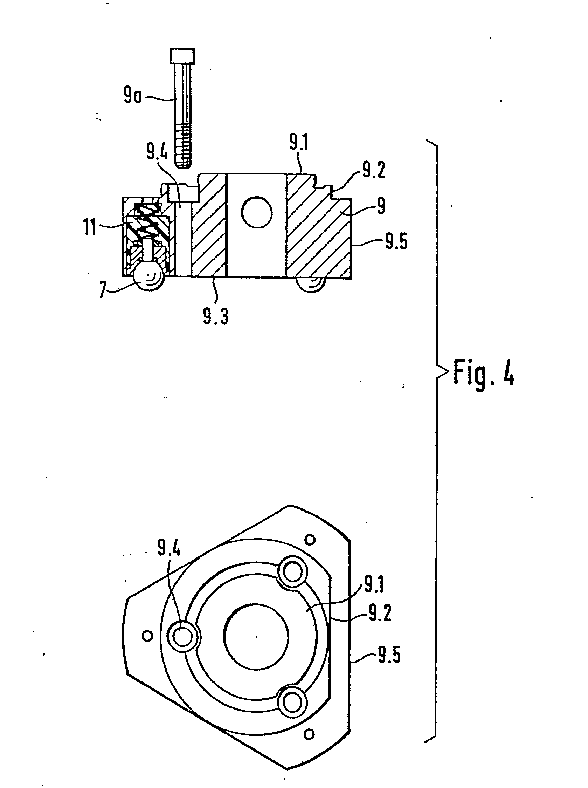

Fig. 4 zeigt ein anderes Spannfutter 9, mit dem ein Halter
4 mechanisch aufgespannt wird, und zwar mittels dreier
Schrauben 9a, die durch die Bohrungen 9.4 hindurch in die
Gewindesacklöcher 4.2 des Halters eingeschraubt werden.
Aus der Stirnfläche 9.3 ragen wieder die zentrierenden
Kugeln 7 als Halbkugeln hervor. - Dieses Spannfutter 9
kann seinerseits mit seinem Kurzkegel 9.1 und der Referenzfläche 9.2 von einer Pinole 2 aufgenommen werden. Vorzugsweise wird es aber zur Bearbeitung einer Elektrode
(eines Werkzeuges) in eine entsprechende Spannvorrichtung
auf dem Tisch einer Werkzeug-Bearbeitungsmaschine eingespannt.

Dipl.-Ing. Günter Schliebs
Dr. rer. nat. Horst Zinngrebe

H 509

Blatt 7

Patentanwälte
in Darmstadt

0048458

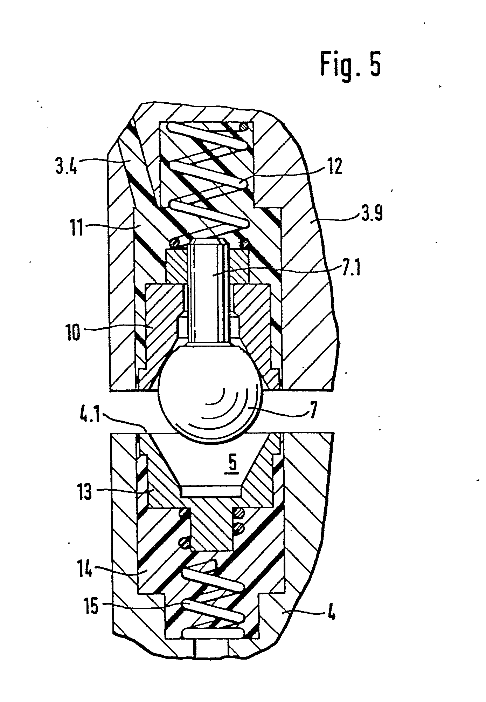

Eine bevorzugte Ausführungsform der Dreipunkt-Zentrierung eines Elektroden-(Werkzeug-) Halters 4 an einem Spannfutter 3 bzw. 9 ist in der Anordnung in Fig. 1 und in der konstruktiven Ausführung in vergr. Maßstab in Fig. 5 in Längsschnitten dargestellt.

Die zum Spannfutter 3 bzw. 9 gehörigen Kugeln 7 sind in Näpfen 10 angeordnet und mittels angeschossener Bolzen 7.1 gehalten, die in Ausnehmungen 11 eingegossen sind. Zwischen den Böden von Napf 10 und Ausnehmung 11 ist eine Druckfeder 12 angeordnet. Die Vergußmasse, vorzugsweise ein Gießharz, ist durch die Füllöffnung 3.4 eingefüllt worden. Der Napf 10 hat eine kegelförmige Aufnahme für die Kugel 7, an der diese auf einem Kreis anliegt.

Im Halter 4 sind die Becher 5 als Sitze für die als Halbkugeln hervorstehenden Kugeln 7 in Näpfen 13 herausgearbeitet, die in Ausnehmungen 14 eingegossen sind. Zwischen den Böden von Napf 13 und Ausnehmung 14 ist wieder eine Druckfeder 15 angeordnet. Die Vergußmasse ist durch eine Füllöffnung 4.3 eingefüllt worden.

Wesentlich für die Zentrierfunktion ist nun ersichtlich, daß die Kugeln 7 untereinander genau gleich sind und an allen Spannfuttern 3 bzw. 9 genau als Halbkugeln hervorstehen und die Berührungslinien der Kugeln mit den Wandungen der Becher 5 in den Näpfen 13 bei allen Haltern 4 in dem selben Abstand zu deren Stirnfläche 4.1 liegen. Diese Forderung läßt sich nun auf einfache Weise mit dem erfindungsgemäßen Kopierverfahren erfüllen.

Dipl.-Ing. Günter Schliebs
Dr. rer. nat. Horst Zinngrebe

H 509

Blatt 8

Patentanwälte
in Darmstadt

0048458

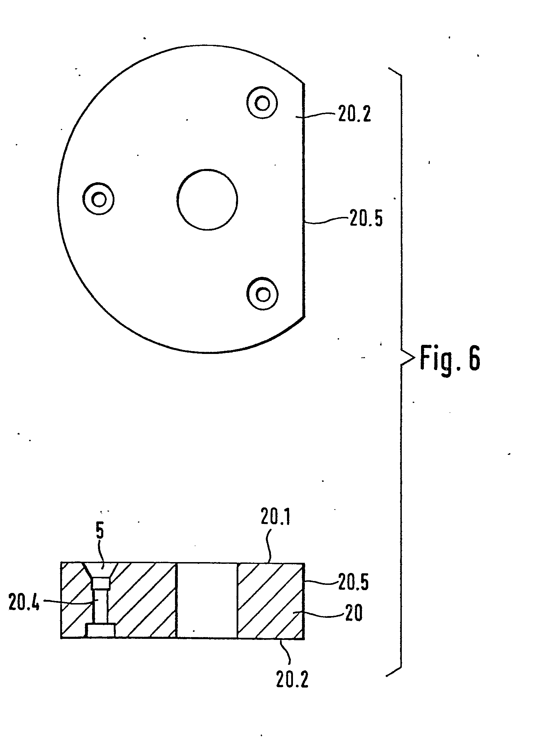

Wesentlicher Bestandteil ist ein Lehrfutter 20 (Fig. 6), dessen - im Beispiel als Zylinderabschnitt geformter - Körper zwei planparallele Stirnflächen 20.1, 20.2 und wieder eine Referenzfläche 20.3 nach dem Maß der Referenzflächen 3.2 bzw. 9.2 an den Spannfuttern 3 bzw. 9 bzw. nach dem Abstandsmaß der Anschlagleiste 2.1 an der Pinole 2 (Fig. 1) hat. In die Stirnfläche 20.1 sind drei konische Becher 5 als Master für die Becher 5 in den Haltern 4 präzise eingearbeitet. Am Grunde dieser Becher münden den Körper achsparallel durchsetzende Bohrungen 20.4.

Zur Herstellung eines Spannfutters 3 bzw. 9 mittels eines solchen Lehrfutters 20 werden in dessen Ausnehmungen 11 Federn 12 und Näpfe 10 mit Kugeln 7 eingesetzt. Dann wird das Spannfutter mit seiner Stirnfläche 3.3 bzw. 9.3 auf die Stirnfläche 20.1 des Lehrfutters aufgesetzt, und beide werden mittels ihrer Zentrierflächen 3.5 bzw. 9.5 und 20.5 genau aufeinander zentriert. Die mit axialem und radialem Spiel beweglichen Kugeln 7 setzen sich unter dem Druck der Federn 12, die bei einem gewissen Auflagedruck zurückweichen, satt in die Becher 5. Spann- und Lehrfutter werden zusammengespannt, und die Ausnehmungen 11 werden durch die Füllöffnungen mit einem Gießharz ausgegossen. Nach dem Erstarren des Gießharzes werden die Teile getrennt und das fertige Spannfutter aus der Vorrichtung entnommen.

Zur Herstellung eines Halters 4 wird entsprechend verfahren, nur werden vorher in die Näpfe 5 des Lehrfutters 20 Kugeln 7 mit Bolzen 7.1 in die Bohrungen 20.4 eingesetzt. Diese Kugeln stehen als Halbkugeln über die Stirnfläche 20.1 vor. Wird jetzt das Lehrfutter auf einen Halter 4 aufgesetzt und mit diesem mittels der Zentrierflächen 4.5, 20.5 in der erwähnten Vorrichtung genau aufeinander zentriert, so
stellen sich die in den Ausnehmungen 14 mit Spiel beweglichen Näpfe 13 unter dem Druck der Federn 15 genau auf
die Kugeln 5 ein. Sie werden in ihrer Lage durch ein bei
4.3 eingefülltes Gießharz nach dessen Erstarren in der
eingenommenen Lage gehalten.

Auf diese Weise lassen sich eine beliebige Zahl von
Haltern und Futtern herstellen. Man erkennt, daß nach dem
Spannen eines Halters am Futter die Kugeln druckfrei in
ihren Bechern 5 sitzen. Axiale Spanndrücke werden zwischen
der Stirnfläche 3.3 bzw. 9.3 eines Spannfutters 3 bzw. 9
und der Bodenfläche 4.1 eines Halters 4 aufgenommen. Es
besteht aber auch die Möglichkeit, ggf. die Berührungsflächen von Futter und Halter nach dem Erstarren der Vergußmasse durch Abschleifen etwas zurückzusetzen, wenn die
Näpfe 10, 13 aus einem entsprechend harten Werkstoff gefertigt sind.

Man erkennt ferner, daß sich die als Beispiel gezeigte
Ausführungsform der Erfindung in Einzelheiten abwandeln
läßt, insbesondere was das Aufbringen des Anlagedrucks
der Kugeln bzw. Becher während des Zusammenspannens mit
dem Lehrfutter durch andersartige Federn und das Festlegen der Näpfe in ihren Ausnehmungen, z. B. mittels Lötringen, anbetrifft. Auch ist die Ausführung des Lehrfutters
20 und der für die Erfindung nicht wesentlichen Mittel zur
Zentrierung mit den Duplikaten nicht auf das Beispiel der
Figur 6 beschränkt.

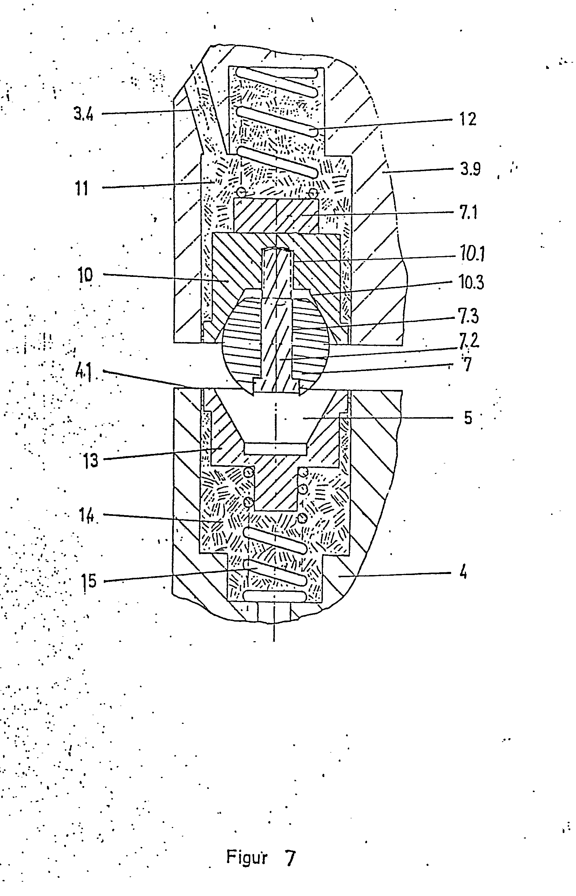

Figur 7 zeigt eine alternative Ausführungsform der Erfindung, bei der jede Kugel 7 in besonders einfacher Weise in
dem zugehörigen Napf 10 verankert ist. Wie dargestellt ist
die Kugel 7 mit einer axialen Bohrung 7.3 versehen und der
zugehörige Napf 10 weist ein     Gewinde-Sackloch 10.1 auf.
In die Bohrung 7.3 ist ein Bolzen 7.2 eingeführt und in das
Gewinde-Sackloch 10.1 eingeschraubt und dort in nicht dargestellter Weise unlösbar verankert. Wie bei der Ausführungsform gemäß Figur 5 der Erfindung liegt die Kugel 7 auf einem
Umfangskreis in dem Aufnahmekegel 10.3 des Napfes 10 an.

Dipl.-Ing. Günter Schliebs
Dr. rer. nat. Horst Zinngrebe

· ) c

European Patent Attorneys
Mandataires en brevet européens

Schliebs + Zinngrebe, Claudiusweg 17A, D-6100 Darmstadt

An das
Europäische Patentamt

Erhardtstr.27

8000 München 2

Telefon: (06151) 46753
Telex: 0419499
Telegramm: inventron

Claudiusweg 17A
D-6100 Darmstadt

| Ihr Brief | Ihr Ref. | Unser Ref. H 509 | Datum 15.9.1981 |
|---|---|---|---|

Betrifft: Europäische Patentanmeldung

Anmelder: Dieter Hansen GmbH,          6116 Eppertshausen

Anordnung aus Werkzeughalter und Spindel-Spannfutter für
Werkzeugmaschinen und Kopierverfahren zur Herstellung

1. Anordnung aus Werkzeughalter und Spindel-Spannfutter
für Werkzeugmaschinen zur spanabhebenden Bearbeitung
von Werkstücken, dadurch gekennzeichnet, daß der gespannte Werkzeughalter (4) mit seiner Bodenfläche (4.1)
an der Stirnfläche (3.3) des Spindel-Spannfutters (3)
an drei Punkten aufliegt und, bezogen auf die Stirnfläche (3.3), zentriert ist, an denen Halbkugeln (7)
über die Stirnfläche vorstehen und diese aufnehmende
Vertiefungen (5) in der Bodenfläche (4.1) liegen.

2. Anordnung nach Anspruch 1, dadurch gekennzeichnet, daß
in die Stirnfläche (3.3) des Spindel-Spannfutters (3)
Kugeln (7) zur Hälfte und in die Bodenfläche (4.1) des
Werkzeughalters (4) konische Becher (5) als Aufnahmen
für die zentrierenden Halbkugeln eingelassen sind.

Dipl.-Ing. Günter Schliebs
Dr. rer. nat. Horst Zinngrebe

H 509

Blatt 11

Patentanwälte
in Darmstadt

0048458

3. Anordnung nach Anspruch 2, dadurch gekennzeichnet, daß die Kugeln (7) in Näpfen (10) angeordnet und gehalten sind, die in Ausnehmungen (11) im Spindel-Spannfutter (3) eingeschoben und eingegossen sind.

4. Anordnung nach Anspruch 2, dadurch gekennzeichnet, daß die Becher (5) in Näpfen (13) ausgeformt sind, die in Ausnehmungen (14) des Werkzeughalters (4) eingeschoben und eingegossen sind.

5. Anordnung nach Anspruch 3 und 4, dadurch gekennzeichnet, daß zwischen den Böden der Näpfe (10,13) und der Ausnehmungen (11,14) Druckfedern (12,15) angeordnet sind.

6. Anordnung nach Anspruch 3, dadurch gekennzeichnet, daß die Kugeln in den Näpfen (10) mittels angesetzter Bolzen (7.1) gehalten sind.

7. Anordnung nach Anspruch 1, dadurch gekennzeichnet, daß die Werkzeugmaschine eine Funkenerodiermaschine und das Spindel-Spannfutter (3) ein Magnetspannfutter ist.

8. Kopierverfahren zur Herstellung einer Paarung aus Werkzeughalter und Spindel-Spannfutter nach den vorhergehenden Ansprüchen, dadurch gekennzeichnet, daß

   ein Lehrfutter (20) mit zwei planparallelen Flächen (20.1, 20.2) hergestellt wird, in dessen eine Fläche (20.1) an den vorgegebenen drei Punkten becherförmige Aufnahmen (5) für Kugeln derart, daß diese als Halbkugeln über die Fläche (20.1) vorstehen, eingearbeitet werden;

daß ein Spannfutter (3,9) in der Weise hergestellt
wird, daß in drei vorbereitete Ausnehmungen (11)
drei Druckfedern (12) und drei Näpfe (10) mit je
einer Kugel (7) eingeschoben werden,

und daß das vorbereitete Futter mit dem Lehrfutter
(20) deckungsgleich zusammengefügt und unter einen
Druck gesetzt wird, der den Gegendruck der Druckfedern (12) überwindet, worauf die Näpfe (10) in
der Lage, in der sie sich eingestellt haben, mit
einem erstarrungsfähigen flüssigen Werkstoff, z.B.
Gießharz, eingegossen werden;

daß ein Werkzeughalter (4) in der Weise hergestellt
wird, daß in drei vorbereitete Ausnehmungen (14)
drei Druckfedern (15) und drei Näpfe (13) eingeschoben werden,

und daß der vorbereitete Halter mit dem Lehrfutter
(20), in dessen Aufnahmen (5) Kugeln (7) eingesetzt
worden sind, deckungsgleich zusammengefügt und unter
einen Druck gesetzt wird, der den Gegendruck der
Druckfedern (15) überwindet, worauf die Näpfe (13)
in der Lage, in der sie sich eingestellt haben, mit
einem erstarrungsfähigen flüssigen Werkstoff, z.B.
Gießharz, eingegossen werden.

9. Verfahren nach Anspruch 8, dadurch gekennzeichnet, daß
ggf. die Stirnflächen der Futter (3, 9) bzw. die Bodenflächen der Halter (4) nach dem Erstarren der Vergußmasse und Abheben von dem Lehrfutter (20) um einige
Zehntel mm abgeschliffen werden.

10. Anordnung nach einem der Ansprüche 1 bis 7, dadurch
gekennzeichnet, daß die Kugel (7) eine Axialbohrung
(10.3) und der zugehörige Napf (10) ein Gewinde-Sackloch (10.1) aufweisen, wobei die Kugel (7) mittels eines
Gewinde-Bolzens (7.2) im Napf (10) gehalten ist.

**Fig.1**

1
2
2.1
3
X
11
10
7
8.1
4
4.3

**Fig. 2**

5
13    5    4.2    4.1    4.5
14
4.3
4
4.1
4.2
5
5
4.5

0048458

Fig. 3

Fig. 4

## Fig. 5

0048458

Fig. 6

Figur 7